# EUROPEAN PATENT APPLICATION

(11) **EP 4 745 428 A1**
(43) Date of publication of application: **20.05.2026**
(21) Application number: 24842894.8
(22) Date of filing: 21.06.2024
(51) Int. Cl.: F16G 1/28

(54) **TOOTHED BELT**

(30) Priority: 14.07.2023 JP 2023116201
(71) Applicant: Bando Chemical Industries, Ltd., Kobe-shi, Hyogo 650-0047 (JP)
(72) Inventor: SHINDO, Masahiro, Kobe-shi, Hyogo 650-0047 (JP); NAKADATE, Jun, Kobe-shi, Hyogo 650-0047 (JP)
(74) Representative: Parker, Andrew James
(86) International application number: PCT/JP2024/022628
(87) International publication number: WO 2025/018098

(57) **Abstract**

Provided is a toothed belt in which a tensile elastic modulus of a rubber composition constituting belt teeth satisfies the following relationships (1) and (2):
(1) tensile elastic modulus X in belt width direction < tensile elastic modulus Y in belt length direction; and
(2) tensile elastic modulus X in belt width direction < tensile elastic modulus Z in belt thickness direction.

## Description

### TECHNICAL FIELD

The present invention relates to a toothed belt.

This application claims priority on Japanese Patent Application No. 2023-116201 filed on July 14, 2023, the entire content of which is incorporated herein by reference.

### BACKGROUND ART

Toothed belts are suitable for applications requiring synchronous rotation and are used in various fields. Toothed belts are used, for example, as power transmitting means for motorcycles (for example, PATENT LITERATURE 1 below).

### CITATION LIST

### PATENT LITERATURE

PATENT LITERATURE 1: Japanese Laid-Open Patent Publication JP H9 - 290 467 A

### SUMMARY OF THE INVENTION

### TECHNICAL PROBLEM

Toothed belts used for rear-wheel drive applications on electric motorcycles are toothed belts used for high-load transmission applications. In toothed belts used for high-load transmission applications, damage such as tooth chipping is likely to occur.

In order to avoid tooth chipping and lengthen the durability life, it can be considered to increase the tooth shear strength of a toothed belt. In order to increase the tooth shear strength, it can be considered to increase the elastic modulus of each belt tooth. If the amount of a reinforcing material contained in a rubber composition constituting the belt teeth is increased, the elastic modulus of the rubber composition can be increased.

On the other hand, if the content of the reinforcing material becomes high, the viscosity of the uncrosslinked rubber composition becomes high, so that tooth portions of the toothed belt cannot be molded in some cases.

### SOLUTION TO THE PROBLEM

An object of the present disclosure is to provide a toothed belt in which tooth chipping is less likely to occur in each belt tooth and that has good durability.

A toothed belt according to one aspect of the present invention is a toothed belt in which a tensile elastic modulus of a rubber composition constituting belt teeth satisfies the following relationships (A) and (B):
(A) tensile elastic modulus X in belt width direction < tensile elastic modulus Y in belt length direction; and
(B) tensile elastic modulus X in belt width direction < tensile elastic modulus Z in belt thickness direction.

### ADVANTAGEOUS EFFECTS OF THE INVENTION]

The toothed belt according to the one aspect of the present invention is a toothed belt in which tooth chipping is less likely to occur in each belt tooth and that has good durability.

### BRIEF DESCRIPTION OF DRAWINGS

FIG. 1 is a perspective view showing an example of a toothed belt.
FIG. 2 is a cross-sectional view taken along a line A-A in FIG. 1.
FIG. 3 is an end view taken along a line B-B in FIG. 1.
FIG. 4 is a diagram illustrating a method for measuring a tensile elastic modulus X in a belt width direction.
FIG. 5 is a diagram illustrating a method for measuring a tensile elastic modulus Y in a belt length direction.
FIG. 6 is a diagram illustrating a method for measuring a tensile elastic modulus Z in a belt thickness direction.
FIG. 7 is a diagram illustrating a production method 1 for the toothed belt.
FIG. 8 is a diagram illustrating the production method 1 for the toothed belt.
FIG. 9 is a diagram illustrating the production method 1 for the toothed belt.
FIG. 10 is a diagram illustrating the production method 1 for the toothed belt.
FIG. 11 is a diagram illustrating the production method 1 for the toothed belt.
FIG. 12 is a diagram illustrating a production method 2 for the toothed belt.
FIG. 13 is a diagram illustrating the production method 2 for the toothed belt.
FIG. 14 is a diagram illustrating the production method 2 for the toothed belt.
FIG. 15 is a diagram illustrating the dimensions of toothed belts produced in Examples and Comparative Examples.
FIG. 16 is a diagram showing a pulley layout of a power transmission belt system used in a running test in the Examples and the Comparative Examples.

### DETAILED DESCRIPTION

An outline of an embodiment of the present invention will be listed and described.
(1) A toothed belt in which a tensile elastic modulus of a rubber composition constituting belt teeth satisfies the following relationships (A) and (B):
   (A) tensile elastic modulus X in belt width direction < tensile elastic modulus Y in belt length direction; and
   (B) tensile elastic modulus X in belt width direction < tensile elastic modulus Z in belt thickness direction.

As described above, if the elastic modulus of each belt tooth is increased, the tooth shear strength of the toothed belt can be increased. The present inventors have verified this point in detail, and as a result, it has been found that the tensile elastic modulus in the belt width direction does not have much effect on the tooth shear strength, but the tooth shear strength is increased when the tensile elastic modulus in the belt length direction and the tensile elastic modulus of the belt thickness direction become higher.

Since the toothed belt described in (1) above is a toothed belt completed based on such findings, and the tensile elastic modulus of the rubber composition constituting the belt teeth satisfies the above relationships (A) and (B), the tooth shear strength is high, and tooth chipping is less likely to occur.

(2) In the toothed belt of (1) above, preferably, the rubber composition contains short fibers.

In this case, it is easy to mold a belt tooth that satisfies the above relationships (A) and (B) without impairing the moldability of the belt teeth.

(3) In the toothed belt of (1) or (2) above, preferably, ratios of the tensile elastic modulus Y and the tensile elastic modulus Z to the tensile elastic modulus X are both 1.1 or more.

This case is suitable for making each belt tooth as a belt tooth that has high tooth shear strength and is easily molded.

(4) In the toothed belt of any one of (1) to (3) above, preferably, the tensile elastic modulus X is 3.5 MPa or more.

In this case, tooth chipping of each belt tooth is even less likely to occur.

(5) In the toothed belt of any one of (1) to (4) above, preferably, a pitch of the belt teeth is 8 mm or more and 14 mm or less.

(6) The toothed belt of any one of (1) to (5) above further preferably satisfies the following relationship (C):
(C) tensile elastic modulus Y in belt length direction < tensile elastic modulus Z in belt thickness direction.

When the above relationship (C) is satisfied, the tooth shear strength becomes higher, and tooth chipping is even less likely to occur.

(7) In the toothed belt of any one of (2) to (6) above, preferably, the rubber composition constituting the belt teeth is a rubber composition obtained by crosslinking an uncrosslinked rubber composition containing a rubber component and short fibers, and a content of the short fibers is 1 part by mass or more and 7 parts by mass or less per 100 parts by mass of the rubber component.

(8) In the toothed belt of (7) above, preferably, the rubber component is one of hydrogenated nitrile rubber, chloroprene rubber, and ethylene-propylene-diene rubber.

(9) In the toothed belt of any one of (1) to (8) above, preferably, a Duro-A hardness of the rubber composition constituting the belt teeth is 85 or more and 98 or less.

(10) The toothed belt of any one of (1) to (9) above preferably comprises a reinforcing fabric forming a belt inner circumferential surface.

Hereinafter, the embodiment of the present invention will be described in detail with reference to the drawings.

### Toothed Belt

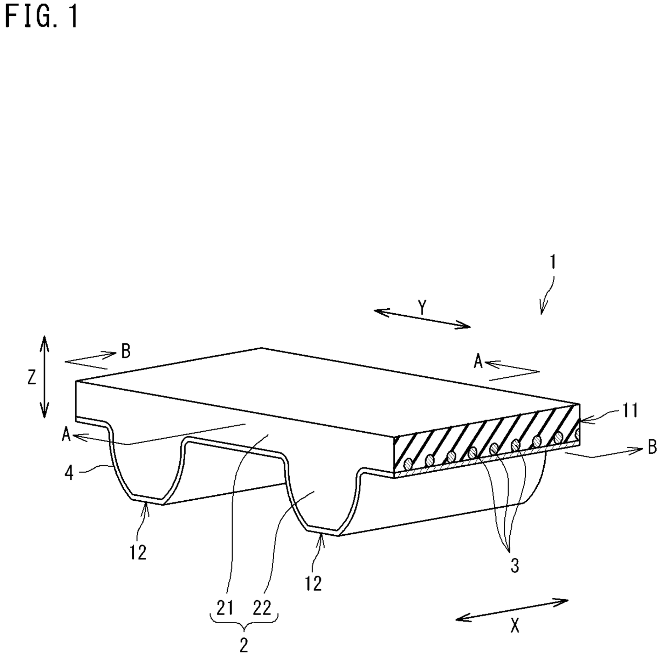

FIG. 1 is a perspective view showing a part of a toothed belt 1 according to the embodiment of the present invention.

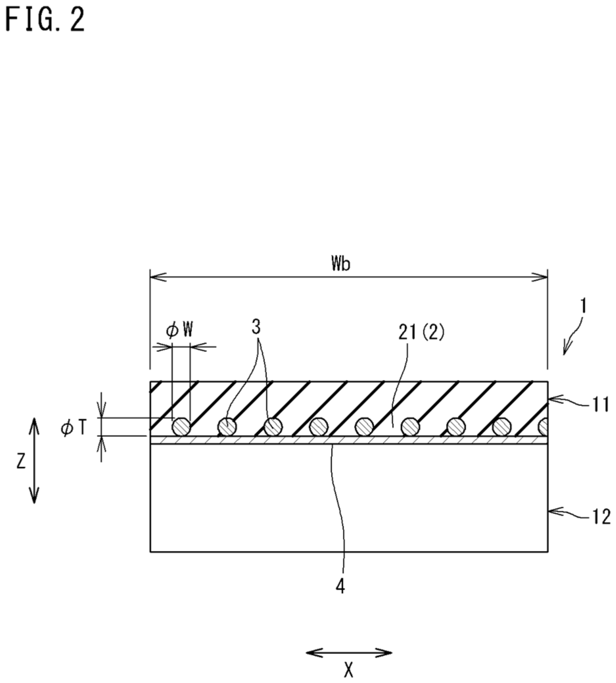

FIG. 2 is a cross-sectional view taken along a line A-A in FIG. 1.

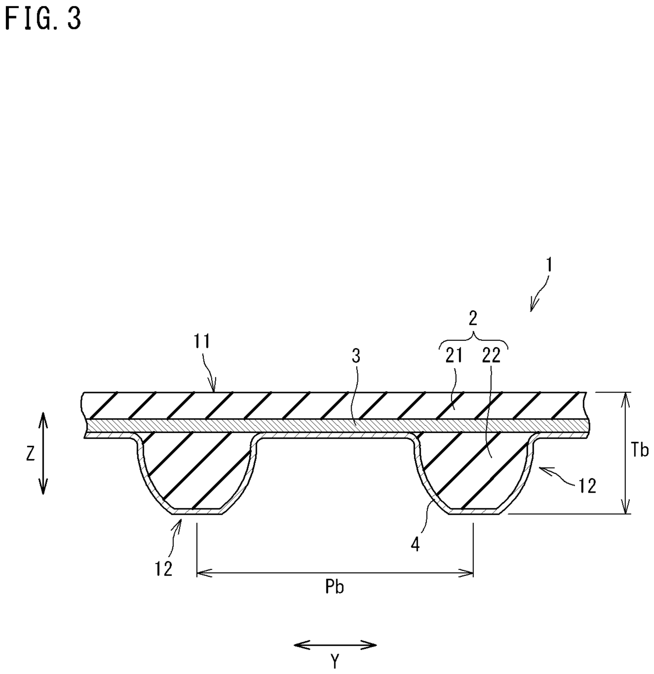

FIG. 3 is an end view taken along a line B-B in FIG. 1.

FIG. 1 shows a part of the toothed belt 1. The toothed belt 1 is an endless meshing transmission belt. The toothed belt 1 is a single-sided toothed belt.

In FIG. 1 to FIG. 3, a direction indicated by a double-headed arrow X is the width direction of the toothed belt 1. A direction indicated by a double-headed arrow Y is the length direction of the toothed belt 1. The length direction is also the belt circumferential direction of the toothed belt 1. A direction indicated by a double-headed arrow Z is the thickness direction of the toothed belt 1. The upper side of each drawing sheet is the outer circumferential side of the toothed belt 1, and the lower side of each drawing sheet is the inner circumferential side of the toothed belt 1.

The belt length (belt length along a belt pitch line) of the toothed belt 1 is, for example, 225 mm or more and 6000 mm or less.

A belt width Wb of the toothed belt 1 is, for example, 10 mm or more and 120 mm or less.

A belt thickness Tb of the toothed belt 1 is, for example, 3.5 mm or more and 9.0 mm or less. The belt thickness Tb of the toothed belt 1 is the thickness of the thickest part of the toothed belt 1.

The dimensions of the toothed belt according to the embodiment of the present invention are not limited to these ranges.

The toothed belt 1 has a back portion 11 and a plurality of belt teeth 12.

The back portion 11 extends in the belt circumferential direction. The back portion 11 has an endless band-like shape. In a cross-section of the toothed belt 1 perpendicular to the belt circumferential direction, the cross-sectional shape of the back portion 11 is a quadrangular shape.

The plurality of belt teeth 12 are provided on the inner circumferential side of the back portion 11. The plurality of belt teeth 12 are arranged at equal intervals in the belt circumferential direction. Each belt tooth 12 extends in the belt width direction.

A pitch Pb of the belt teeth 12 is, for example, 8 mm or more and 14 mm or less.

The tooth profile of each belt tooth 12 is, for example, an arc tooth profile.

### Configuration of Toothed Belt

The toothed belt 1 includes a belt body 2, a tensile cord 3, and a reinforcing fabric 4. The belt body 2, the tensile cord 3, and the reinforcing fabric 4 will be described below.

### Belt Body

The belt body 2 has a band-like shape.

The belt body 2 includes a base portion 21 and a plurality of tooth portions 22.

The base portion 21 extends in the belt circumferential direction. The tensile cord 3 is embedded in the base portion 21. The plurality of tooth portions 22 are provided on the inner circumferential side of the base portion 21. The plurality of tooth portions 22 are integrated with the base portion 21. The plurality of tooth portions 22 are arranged at equal intervals in the belt circumferential direction. The surfaces of the tooth portions 22 are covered with the reinforcing fabric 4.

The belt body 2 is composed of, for example, a rubber composition (hereinafter also referred to as crosslinked rubber composition) obtained by crosslinking an uncrosslinked rubber composition containing a rubber component and rubber compounding ingredients through heating and pressurization.

In the belt body 2, each of the base portion 21 and the tooth portions 22 is composed of a crosslinked rubber composition.

In the toothed belt 1 shown in FIG. 1, the base portion 21 and the tooth portions 22 are composed of different crosslinked rubber compositions. The crosslinked rubber composition constituting the base portion 21 and the crosslinked rubber composition constituting the tooth portions 22 may have the same composition.

In the toothed belt 1 according to the present embodiment, the rubber composition constituting the tooth portions 22 of the belt body 2 has a tensile elastic modulus that satisfies the following relationship (A) and relationship (B).
(A) tensile elastic modulus X in belt width direction < tensile elastic modulus Y in belt length direction
(B) tensile elastic modulus X in belt width direction < tensile elastic modulus Z in belt thickness direction

In the toothed belt 1, since the tensile elastic modulus Y in the belt length direction and the tensile elastic modulus Z in the belt thickness direction are larger than the tensile elastic modulus X in the belt width direction, tooth chipping of each belt tooth is less likely to occur.

In a toothed belt, the tensile elastic modulus X does not greatly affect tooth chipping of each belt tooth, whereas the tensile elastic moduli Y and Z greatly affect tooth chipping of each belt tooth. Therefore, in the toothed belt 1, the tensile elastic moduli Y and Z, which greatly affect tooth chipping of each belt tooth, are increased to suppress occurrence of tooth chipping of each belt tooth.

Moreover, the toothed belt 1 does not have a large tensile elastic modulus in all directions (width direction, length direction, and thickness direction), and thus it is unnecessary to include a large amount of a reinforcing material, and the moldability of each belt tooth is less likely to be impaired.

In the toothed belt 1, the ratio of the tensile elastic modulus Y to the tensile elastic modulus X is preferably 1.1 or more. In addition, the ratio of the tensile elastic modulus Z to the tensile elastic modulus X is preferably 1.1 or more.

In these cases, the tooth shear strength of the toothed belt 1 can be improved.

The ratio of the tensile elastic modulus Y to the tensile elastic modulus X is at most about 8 and, normally, this ratio is preferably 3 or less. In addition, the ratio of the tensile elastic modulus Z to the tensile elastic modulus X is at most about 8 and, normally, this ratio is preferably 3 or less.

The tensile elastic modulus X is preferably 3.5 MPa or more.

In this case, tooth chipping of each belt tooth is even less likely to occur, and the durability of the toothed belt 1 becomes better.

The upper limits of the tensile elastic modulus Y and the tensile elastic modulus Z are both preferably 30 MPa.

The toothed belt 1 further preferably satisfies the following relationship (C).

### (C) tensile elastic modulus Y in belt length direction < tensile elastic modulus Z in belt thickness direction

When the above relationship (C) is satisfied, the tooth shear strength of the toothed belt 1 is easily increased further. Therefore, the durability of the toothed belt 1 can be improved.

The tensile elastic moduli X, Y, and Z are measured by the following methods, respectively.

### Method for Measuring Tensile Elastic Modulus X

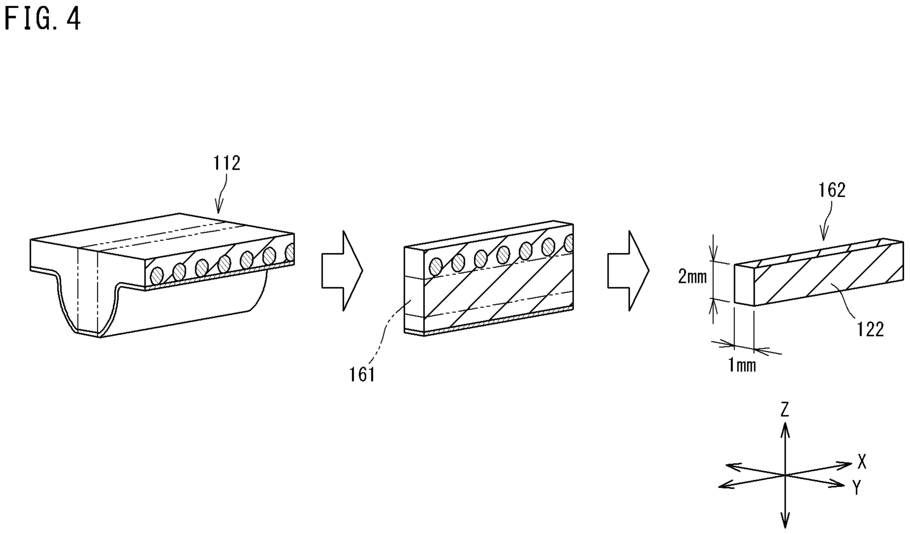

FIG. 4 is a diagram illustrating a method for measuring the tensile elastic modulus X.
(1) First, one belt tooth 112 is cut out from a toothed belt 1.
(2) Next, a sliced piece 161 having a width of about 1 mm and including a tooth tip portion is cut out by inserting a cutting machine blade along the belt width direction.
(3) Next, a strip is cut out from the vicinity of a center portion of a portion corresponding to a tooth portion of the sliced piece 161 such that the length in the Z direction thereof is about 2 mm, and this is used as a test specimen 162. The dimensions of the test specimen 162 are about 1 mm in the Y direction and about 2 mm in the Z direction. The dimension in the X direction depends on the width dimension of the toothed belt.

Both ends of the test specimen 162 in the longitudinal direction (X direction) are grasped, and a tensile test is performed to measure the tensile elastic modulus X.

### Tensile Test

The tensile test is performed at room temperature using a universal tester (Instron).

The test specimen 162 is set in the universal tester with one end of the test specimen 162 grasped by an upper chuck of the universal tester (Instron) and with the other end of the test specimen 162 held by a lower chuck of the universal tester (Instron) such that the longitudinal direction of the test specimen 162 is oriented along the vertical direction. At this time, the distance between the chucks is set to 1 mm.

The tensile test is performed at a tensile speed of 10 mm/min to obtain an S-S curve (stress-strain curve), and the tensile elastic modulus X is calculated based on the slope of the S-S curve at 0 to 20 % elongation.

### Method for Measuring Tensile Elastic Modulus Y

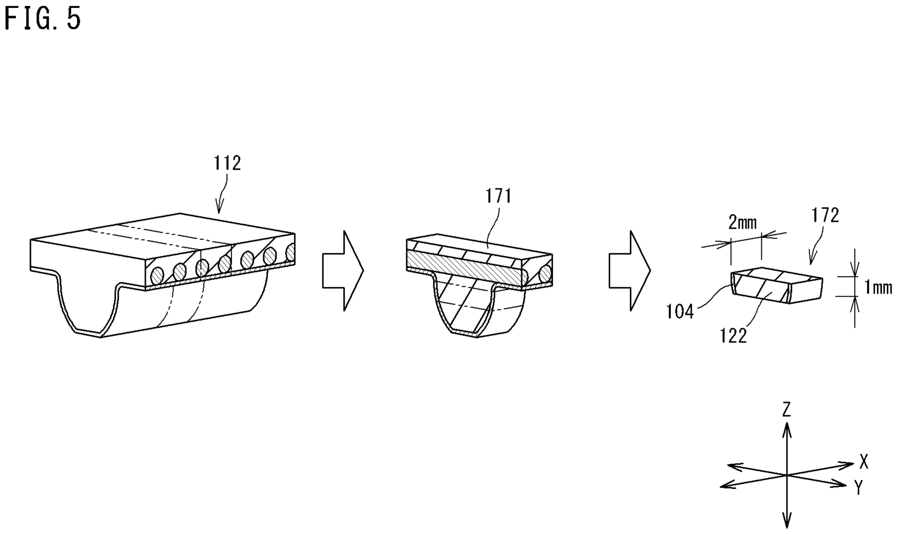

FIG. 5 is a diagram illustrating a method for measuring the tensile elastic modulus Y.
(1) First, one belt tooth 112 is cut out from a toothed belt 1.
(2) Next, a sliced piece 171 having a width of about 2 mm is cut out from the vicinity of a center portion in the width direction by inserting a cutting machine blade along the belt length direction.
(3) Next, a strip having a length of about 1 mm in the Z direction is cut out from a portion close to a base portion of a portion corresponding to a tooth portion of the sliced piece 171, and this is used as a test specimen 172. The dimensions of the test specimen 172 are about 2 mm in the X direction and about 1 mm in the Z direction. The dimension in the Y direction depends on the tooth width dimension of the belt tooth.

Both ends of the test specimen 172 in the longitudinal direction (Y direction) are grasped, and a tensile test is performed to measure the tensile elastic modulus Y.

The method of the tensile test is the same as that at the time of measuring the tensile elastic modulus X. In the measurement of the tensile elastic modulus Y, the test specimen 172 is set in the universal tester (Instron) such that a crosslinked rubber composition constituting a tooth portion 122 is located between the upper chuck and the lower chuck of the Instron.

In FIG. 5, reference sign 104 denotes a reinforcing fabric.

### Method for Measuring Tensile Elastic Modulus Z

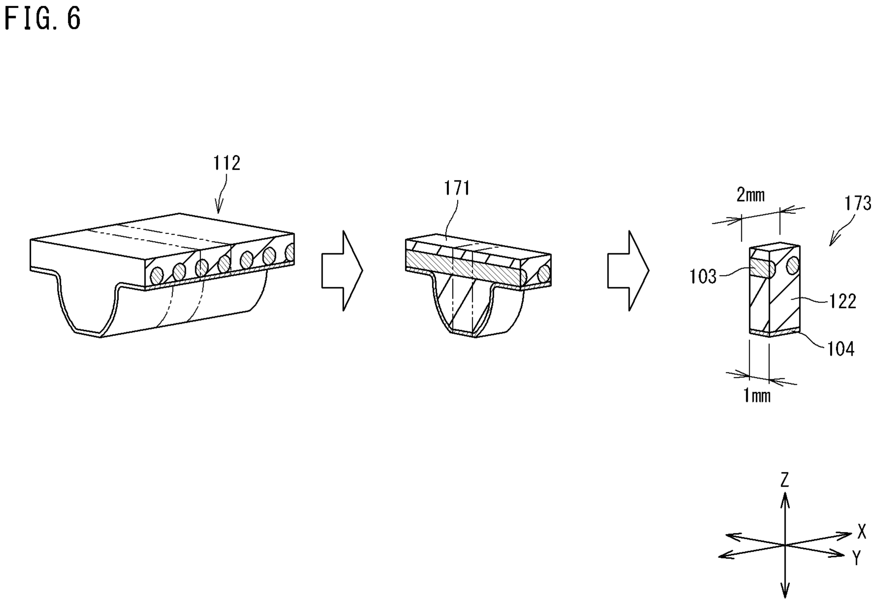

FIG. 6 is a diagram illustrating a method for measuring the tensile elastic modulus Z.
(1) A sliced piece 171 of one belt tooth 112 is cut out in the same manner as in (1) and (2) of the method for measuring the tensile elastic modulus Y.
(2) Next, a strip having a length of about 1 mm in the Y direction is cut out from the vicinity of a center portion of a portion corresponding to a tooth portion of the sliced piece 171, and this is used as a test specimen 173. The dimensions of the test specimen 173 are about 2 mm in the X direction and about 1 mm in the Y direction. The dimension in the Z direction depends on the thickness dimension of the toothed belt.

Both ends of the test specimen 173 in the longitudinal direction (Z direction) are grasped, and a tensile test is performed to measure the tensile elastic modulus Z.

The method of the tensile test is the same as that at the time of measuring the tensile elastic modulus X. In the measurement of the tensile elastic modulus Z, the test specimen 173 is set in the universal tester such that a crosslinked rubber composition constituting a tooth portion 122 is located between the upper chuck and the lower chuck of the universal tester.

In FIG. 6, reference sign 103 denotes a tensile cord, and reference sign 104 denotes a reinforcing fabric.

The Duro-A hardness of the crosslinked rubber composition constituting each belt tooth is preferably 85 or more and 98 or less.

In this case, tooth chipping of each belt tooth is less likely to occur, and the durability of the toothed belt becomes better.

The belt body 2 is composed of, for example, a crosslinked rubber composition obtained by crosslinking an uncrosslinked rubber composition containing a rubber component and rubber compounding ingredients, as described above.

Examples of the rubber component include hydrogenated nitrile rubber (HNBR), chloroprene rubber (CR), ethylene-α-olefin elastomers such as ethylene-propylene-diene rubber (EPDM), chlorosulfonated polyethylene rubber, styrene-butadiene rubber, and epichlorohydrin rubber.

Among these, HNBR, CR, and EPDM are preferable.

The above uncrosslinked rubber composition preferably contains short fibers as a rubber compounding ingredient.

It is preferable that the short fibers contained in the crosslinked rubber composition are oriented in the Y direction and the Z direction and are not oriented in the X direction. In other words, it is preferable that the length direction of the short fibers is oriented in the Y direction and the Z direction and is not oriented in the X direction.

In these cases, it is easy to cause the tensile elastic modulus of the crosslinked rubber composition constituting the tooth portions 22 to satisfy the relationship (A) and the relationship (B) described above. In addition, the tensile elastic modulus of the crosslinked rubber composition constituting each tooth portion is easily increased without decreasing the moldability of each belt tooth.

Furthermore, when the short fibers are oriented in the Z direction rather than in the Y direction, it becomes easier to satisfy the above relationship (C). For example, if the amount of the short fibers added to the rubber composition constituting each tooth portion is increased when producing a toothed belt by a two-stage production method described later, the short fibers are more easily oriented in the Z direction than in the Y direction.

Examples of the short fibers include aramid short fibers, nylon short fibers, and polyester short fibers.

The aramid short fibers are preferably para-aramid short fibers.

Only one type of these short fibers may be used, or two or more types of these short fibers may be used in combination.

The lengths of the short fibers are, for example, 0.5 mm or more and 3.5 mm or less.

The fiber diameters of the short fibers are, for example, 5 µm or more and 50 µm or less.

The content of the short fibers is preferably 1 part by mass or more and 7 parts by mass or less per 100 parts by mass of the rubber component. If the content of the short fibers exceeds 7 parts by mass, cracks are likely to occur in each tooth portion. The content of the short fiber is more preferably 1 part by mass or more and 3 parts by mass or less per 100 parts by mass of the rubber component.

Examples of the rubber compounding ingredients other than the short fibers include a vulcanization accelerator aid, an anti-aging agent, a reinforcing agent, a plasticizer, a co-crosslinking agent, a crosslinking agent, and a processing aid.

Examples of the vulcanization accelerator aid include metal oxides, metal carbonates, fatty acids, and derivatives thereof. Examples of the metal oxides include zinc oxide (zinc white) and magnesium oxide.

Only one of these vulcanization accelerator aids may be used, and two or more of these vulcanization accelerator aids may be used in combination.

The content of the vulcanization accelerator aid is, for example, 3 parts by mass or more and 20 parts by mass or less per 100 parts by mass of the rubber component.

Examples of the reinforcing agent include carbon black and silica. As the reinforcing agent, carbon black and silica may be used in combination.

Examples of the carbon black include channel black, furnace black, thermal black, and acetylene black.

Examples of the furnace black include SAF, ISAF, N-339, HAF, N-351, MAF, FEF, SRF, GPF, ECF, and N-234.

Examples of the thermal black include FT and MT.

Only one of these carbon blacks may be used, or two or more of these carbon blacks may be used in combination.

When carbon black is used, its content is, for example, 5 parts by mass or more and 50 parts by mass or less per 100 parts by mass of the rubber component.

When silica is used, its content is, for example, 10 parts by mass or more and 30 parts by mass or less per 100 parts by mass of the rubber component.

Examples of the plasticizer include dialkyl sebacates, dialkyl phthalates, and dialkyl adipates.

Examples of the dialkyl sebacates include polyether esters and dioctyl sebacate (DOS).

Examples of the dialkyl phthalates include dibutyl phthalate (DBP) and dioctyl phthalate (DOP).

Examples of the dialkyl adipates include dioctyl adipate (DOA).

Only one of these plasticizers may be used, or two or more of these plasticizers may be used in combination.

The content of the plasticizer is, for example, 5 parts by mass or more and 20 parts by mass or less per 100 parts by mass of the rubber component.

Examples of the co-crosslinking agent include trimethylolpropane trimethacrylate, m-phenylenedimaleimide, zinc dimethacrylate, and triallyl isocyanurate. Only one of these co-crosslinking agents may be used, or two or more of these co-crosslinking agents may be used in combination.

The content of the co-crosslinking agent is, for example, 3 parts by mass or more and 10 parts by mass or less per 100 parts by mass of the rubber component.

Examples of the crosslinking agent include sulfur and organic peroxides. Sulfur and an organic peroxide may be used in combination. Of course, only either one may be used.

When sulfur and an organic peroxide are used in combination as the crosslinking agent, as for the total blending amount of the crosslinking agents, for example, preferably, the amount of the sulfur is 0.1 parts by mass or more and 3 parts by mass or less, and the amount of the organic peroxide is 1 part by mass or more and 5 parts by mass or less, per 100 parts by mass of the rubber component.

Examples of the processing aid include stearic acid, polyethylene wax, and metal salts of fatty acids. Only one of these processing aids may be used, or two or more of these processing aids may be used in combination. The content of the processing aid is, for example, 0.5 parts by mass or more and 2 parts by mass or less per 100 parts by mass of the rubber component.

### Tensile Cord

As described above, the tensile cord 3 is embedded in the base portion 21. Examples of the tensile cord 3 include a glass tensile cord, an aramid tensile cord, a carbon tensile cord, and a steel tensile cord. These tensile cords are preferably composed of twisted yarns.

As the tensile cord 3, a carbon tensile cord and a steel tensile cord are preferable. Carbon and steel are materials with a high modulus of elasticity. Therefore, a toothed belt including a carbon tensile cord or a steel tensile cord is less likely to change its length when a load is applied thereto and has a small change in tooth pitch. As a result, the toothed belt including a carbon tensile cord or a steel tensile cord is likely to maintain a good meshing state with a toothed pulley.

As for the outer diameter of the tensile cord 3, each of an outer diameter ØT in the belt thickness direction and an outer diameter ØW in the belt width direction is preferably 0.90 mm or more and 1.70 mm or less. More preferably, each of the outer diameter ØT and the outer diameter ØW is 1.00 mm or more and 1.60 mm or less.

The outer diameter ØT in the belt thickness direction and the outer diameter ØW in the belt width direction may be the same or different.

The tensile cord 3 has a pitch in the belt width direction and is provided so as to form a helix. For example, a tensile cord pair composed of an S-twisted tensile cord 3 and a Z-twisted tensile cord 3 may have a pitch in the belt width direction and be provided so as to form a helix.

The tensile cord 3 is arranged so as to be spaced in the belt width direction and extend in parallel. In appearance, a plurality of tensile cords 3 are arranged side by side in the belt width direction.

In this case, the number of tensile cords 3 per 10 mm of belt width is preferably 5 or more and 20 or less. The toothed belt 1 in which the tensile cord 3 is arranged as described above is suitable for ensuring excellent durability in high-load transmission and excellent tension maintenance in high-load transmission. From the same viewpoint, the number of tensile cords 3 is more preferably 6 or more and 10 or less per 10 mm.

Moreover, the dimension of the gap between adjacent tensile cords 3 is, for example, 0.1 mm or more and 0.7 mm or less.

The tensile cord 3 may be subjected to an adhesive treatment to enhance adhesion to the belt body 2.

Examples of the adhesive treatment include RFL treatment in which heating is performed after immersion in an RFL aqueous solution, and rubber glue treatment in which drying is performed after immersion in rubber glue. Only either one of these adhesive treatments may be performed, or both of these adhesive treatments may be performed.

The tensile cord 3 may be subjected to a prime coat treatment prior to the adhesive treatment. Examples of the prime coat treatment include treatment in which heating is performed after immersion in an epoxy solution or an isocyanate solution.

The adhesive treatment and the prime coat treatment are performed prior to winding the tensile cord on a mold in a method for producing a toothed belt described below.

### Reinforcing Fabric

The reinforcing fabric 4 covers the surfaces of the tooth portions 22. The reinforcing fabric 4 forms the inner circumferential surface of the toothed belt 1. The inner circumferential surface of the toothed belt 1 includes the reinforcing fabric 4.

The reinforcing fabric 4 is a woven fabric.

Examples of the fibers constituting the reinforcing fabric 4 include polyamide fibers (nylon fibers), polyester fibers, aramid fibers, polyparaphenylene benzobisoxazole (PBO) fibers, and cotton.

The reinforcing fabric 4 is preferably, for example, a woven fabric made of polyamide fibers.

The thickness of the reinforcing fabric 4 is, for example, 0.5 mm or more and 2.0 mm or less.

The reinforcing fabric 4 preferably has elasticity like a woven fabric in which weft yarns are subjected to woolly-finish, for example.

The reinforcing fabric 4 may be subjected to an adhesive treatment to enhance adhesion to the belt body 2.

Examples of the adhesive treatment include RFL treatment in which heating is performed after immersion in an RFL aqueous solution, soaking treatment in which drying is performed after immersion in low-viscosity rubber glue, and coating treatment in which high-viscosity rubber glue is applied to the surface on the belt body side and dried. Only one of these treatments may be performed, or two or more of these treatments may be performed.

The reinforcing fabric 4 may be subjected to a prime coat treatment in which heating is performed after immersion in an epoxy solution or an isocyanate solution, prior to the adhesive treatment.

The adhesive treatment and the prime coat treatment are performed prior to winding the reinforcing fabric 4 on a mold in the method for producing a toothed belt described below.

### Method for Producing Toothed Belt

The method for producing the toothed belt 1 will be described next.

The toothed belt 1 can be produced, for example, by a production method 1 for the toothed belt or a production method 2 for the toothed belt which will be described later.

### Production Method 1 for Toothed Belt

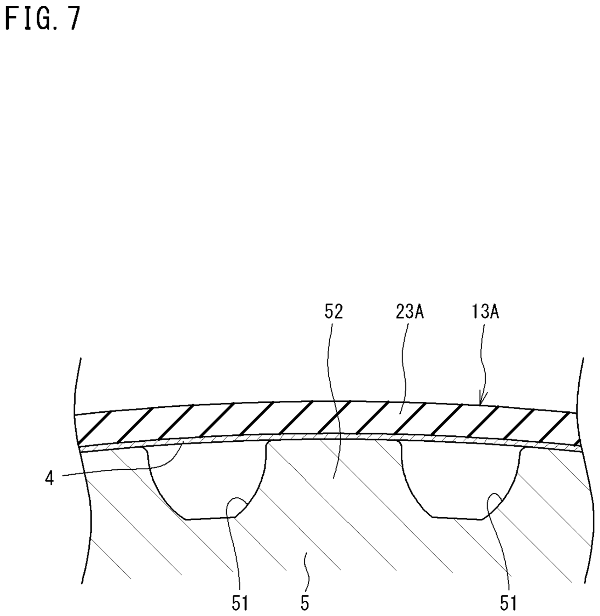

FIG. 7 to FIG. 11 are diagrams illustrating the production method 1 for the toothed belt 1. FIG. 7 to FIG. 11 show only a part of a mold 5 for belt molding and a belt (including belt materials).

The production method for the toothed belt described with reference to FIG. 7 to FIG. 11 is also referred to as two-stage production method, since tooth portions and a base portion are molded separately.

In the production of the toothed belt 1, the mold 5 for belt molding is used.

The mold 5 has a cylindrical shape. On the outer circumference of the mold 5, recesses 51 extending in the axial direction and protrusions 52 extending in the axial direction are provided. The recesses 51 are grooves that have a cross-sectional shape corresponding to the belt teeth 12 and extend in the axial direction (direction perpendicular to the surface of the drawing sheet of FIG. 7). The recesses 51 are provided at a constant pitch so as to be spaced from each other in the circumferential direction. The protrusions 52 are each provided between adjacent recesses 51.

### (1) The materials are prepared.

The rubber component is masticated, and the rubber compounding ingredients are further loaded and kneaded to obtain an uncrosslinked rubber composition. The obtained uncrosslinked rubber composition is shaped to produce an uncrosslinked rubber sheet 23. At this time, as the method for molding the uncrosslinked rubber sheet 23, for example, calendering or the like can be employed.

The tensile cord 3 and the reinforcing fabric 4 are prepared and are each subjected to an adhesive treatment and a prime coat treatment if necessary.

Furthermore, the reinforcing fabric 4 is shaped into a tubular shape.

(2) As shown in FIG. 7, first, the reinforcing fabric 4 shaped into a tubular shape is placed on the outer circumferential surface of the mold 5.

Next, an uncrosslinked rubber sheet 23A is wound on the reinforcing fabric 4. At this time, one uncrosslinked rubber sheet 23A may be wound, or a plurality of uncrosslinked rubber sheets 23A may be wound.

Accordingly, a first uncrosslinked molded body 13A in which the reinforcing fabric 4 and the uncrosslinked rubber sheet 23A are stacked is molded on the mold 5. The uncrosslinked rubber sheet 23A wound in this step is an uncrosslinked rubber sheet for forming tooth portions.

At this time, the uncrosslinked rubber sheet 23A is preferably stacked such that the orientation direction thereof corresponds to the belt length direction. In this case, it is easy to mold a crosslinked rubber composition in which the short fibers are oriented in the Y direction and the Z direction and are not oriented in the X direction.

In the case of winding a plurality of uncrosslinked rubber sheets 23A, each uncrosslinked rubber sheet may have the same composition or may have a different composition.

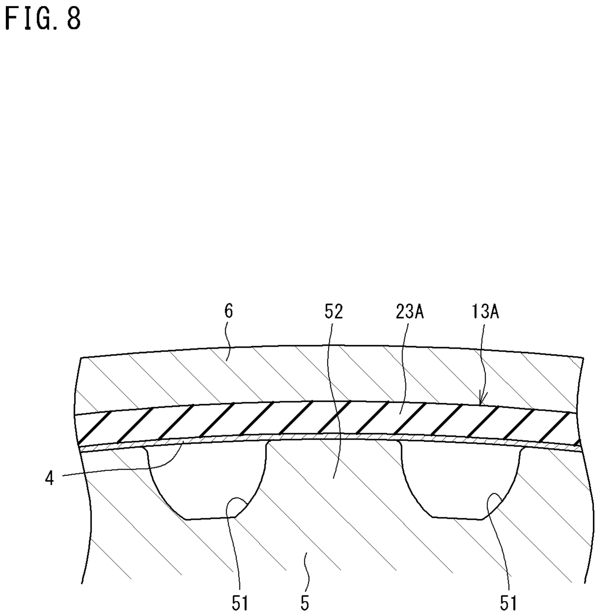

Then, as shown in FIG. 8, a rubber sleeve 6 is placed over the first uncrosslinked molded body 13A on the mold 5 and put into a vulcanization vessel, and the vulcanization vessel is sealed. Next, the vulcanization vessel is filled with high-temperature and high-pressure steam. Furthermore, the vulcanization vessel is maintained in this state for a predetermined time. Accordingly, the first uncrosslinked molded body 13A is pressed against the mold 5 side while being heated.

Thus, the uncrosslinked rubber sheet 23A flows into each of the plurality of recesses 51 of the mold 5 while pressing the reinforcing fabric 4 and is also crosslinked. At this time, the uncrosslinked rubber sheet 23A is heated so as to be in a semi-crosslinked state.

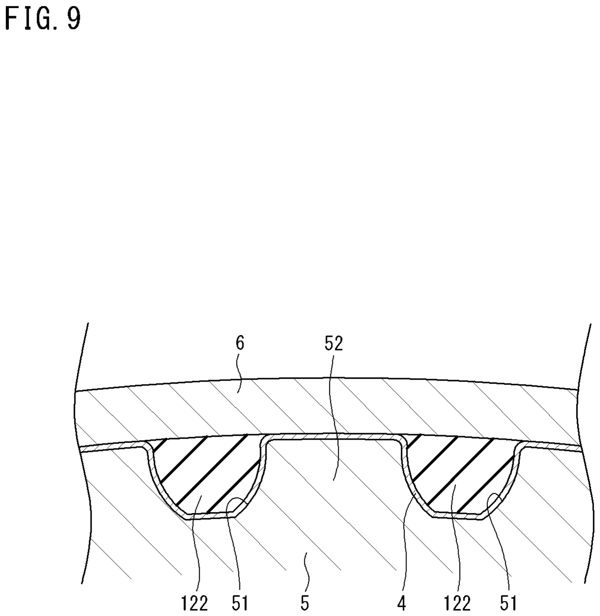

As a result, as shown in FIG. 9, a plurality of semi-crosslinked tooth portions 122 are molded.

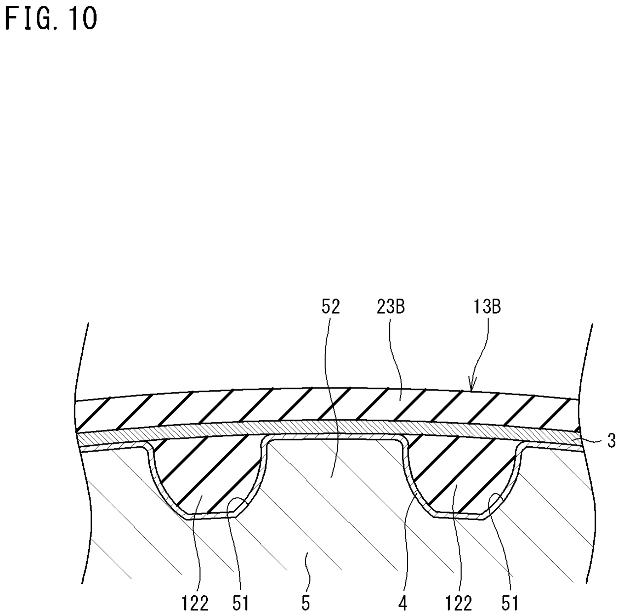

(3) Next, as shown in FIG. 10, the tensile cord 3 is helically wound on the outer circumferences of the molded tooth portions 122.

Furthermore, an uncrosslinked rubber sheet 23B is wound thereon. One or more uncrosslinked rubber sheets 23B (one sheet in FIG. 10) are wound. Accordingly, a second uncrosslinked molded body 13B in which the tensile cord 3 and the uncrosslinked rubber sheet 23B are stacked is molded on the mold 5 (on the tooth portions 122).

At this time, the uncrosslinked rubber sheet 23B is preferably stacked such that the orientation direction thereof corresponds to the belt length direction. The uncrosslinked rubber sheet wound in this step is an uncrosslinked rubber sheet for forming a base portion.

The composition of the uncrosslinked rubber sheet 23B may be the same as or different from the composition of the uncrosslinked rubber sheet 23A.

In the case of winding a plurality of uncrosslinked rubber sheets 23B, each uncrosslinked rubber sheet may have the same composition or may have a different composition.

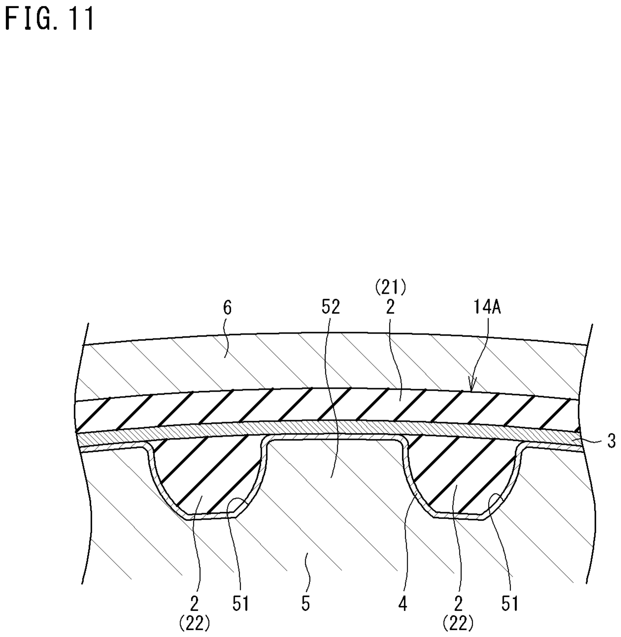

(4) As shown in FIG. 11, the rubber sleeve 6 is placed over the second uncrosslinked molded body 13B on the mold 5 and put into a vulcanization vessel, and the vulcanization vessel is sealed. Next, the vulcanization vessel is filled with high-temperature and high-pressure steam. Furthermore, the vulcanization vessel is maintained in this state for a predetermined time. Accordingly, the second uncrosslinked molded body 13B is pressed against the mold 5 side while being heated.

At this time, the uncrosslinked rubber sheet 23B is crosslinked while passing between the tensile cords 3 and being pressed against the plurality of semi-crosslinked tooth portions 122 molded in the plurality of recesses 51. As a result, a cylindrical belt slab 14A having tooth portions 22 and a base portion 21 that are integrated and completely crosslinked is molded.

(5) The internal pressure of the vulcanization vessel is reduced to release the seal. Subsequently, the belt slab 14A molded between the mold 5 and the rubber sleeve 6 is demolded. Then, the demolded belt slab 14A is cut into rings. Through these steps, the toothed belt 1 is obtained.

### Production Method 2 for Toothed Belt

The method for producing the toothed belt 1 is not limited to the two-stage production method described above, and the toothed belt 1 can also be produced by the following method.

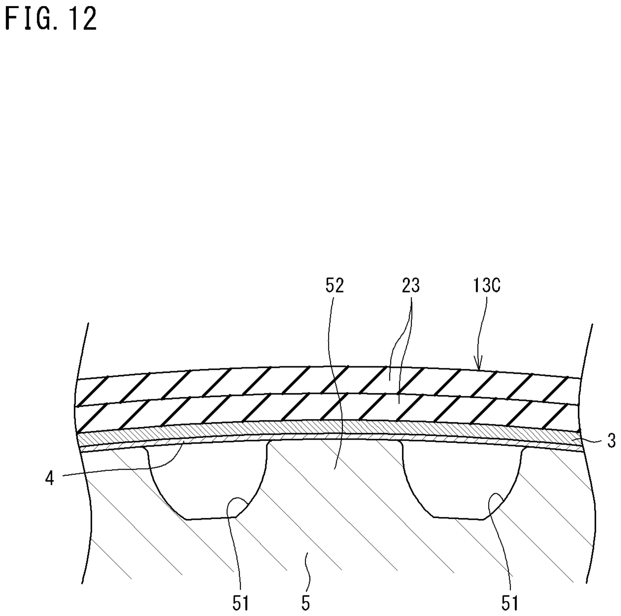

FIG. 12 to FIG. 14 are diagrams illustrating the production method 2 for the toothed belt 1. FIG. 12 to FIG. 14 show only a part of a mold 5 for belt molding and a belt (including belt materials).

The production method for the toothed belt described with reference to FIG. 12 to FIG. 14 is also referred to as one-stage production method, since tooth portions and a base portion are crosslinked simultaneously.

In this production method 2, a mold 5 for belt molding that is the same as in the production method 1 is used.

(1) The materials are prepared in the same manner as in the production method 1.
   That is, an uncrosslinked rubber sheet 23, a tensile cord 3 subjected to an adhesive treatment, and a reinforcing fabric 4 subjected to an adhesive treatment and shaped into a tubular shape are prepared.
(2) As shown in FIG. 12, first, the reinforcing fabric 4 shaped into a tubular shape is placed on the outer circumferential surface of the mold 5. The tensile cord 3 is helically wound on the reinforcing fabric 4 from above.

After the tensile cord 3 is wound, the uncrosslinked rubber sheet 23 is further wound. A plurality of uncrosslinked rubber sheets 23 (two sheets in FIG. 12) are wound. Accordingly, an uncrosslinked molded body 13C in which the reinforcing fabric 4, the tensile cord 3, and the uncrosslinked rubber sheets 23 are stacked is molded on the outer circumference of the mold 5. In stacking the materials, the uncrosslinked rubber sheet 23 is preferably stacked such that the orientation direction thereof corresponds to the belt circumferential direction.

In the case of winding a plurality of uncrosslinked rubber sheets 23, each uncrosslinked rubber sheet may have the same composition or may have a different composition.

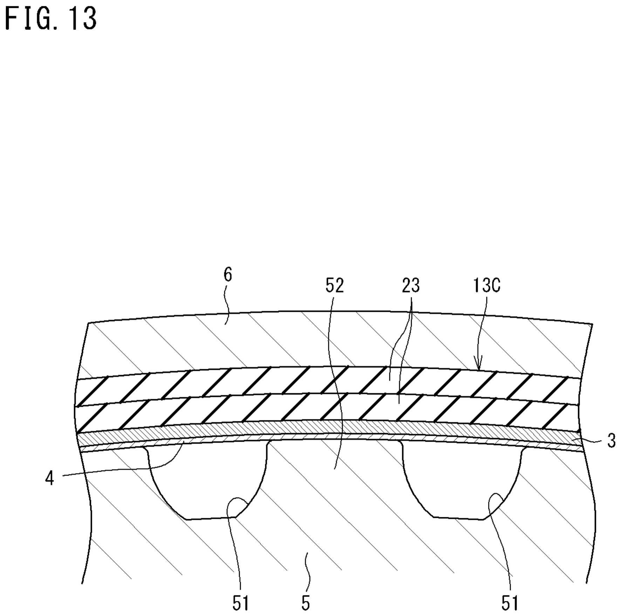

(3) As shown in FIG. 13, a rubber sleeve 6 is placed over the uncrosslinked molded body 13C on the mold 5. The uncrosslinked molded body 13C over which the rubber sleeve 6 has been placed is put into a vulcanization vessel (not shown) together with the mold 5, and the vulcanization vessel is sealed. The vulcanization vessel is filled with high-temperature and high-pressure steam. The vulcanization vessel is maintained in this state for a predetermined time. Accordingly, the uncrosslinked molded body 13C is pressed against the mold 5 side while being heated.

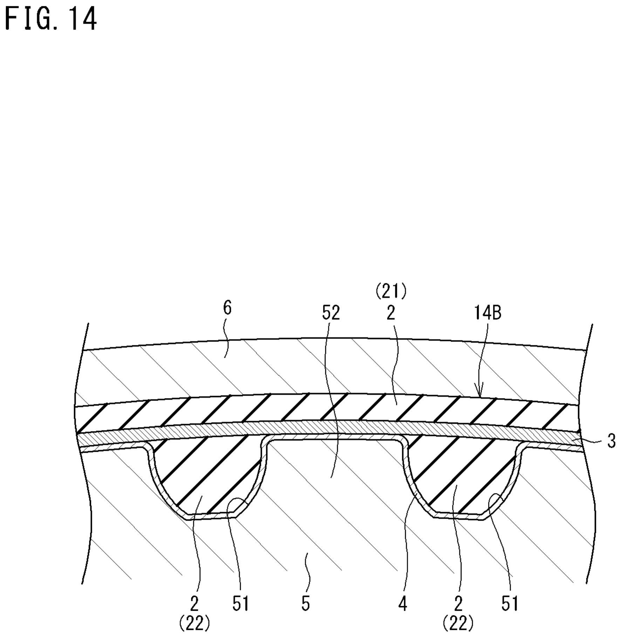

The uncrosslinked rubber sheets 23 flow in a cavity formed between the mold 5 and the rubber sleeve 6. The uncrosslinked rubber sheets 23 pass between the tensile cords 3. The uncrosslinked rubber sheets 23 flow into each of the plurality of recesses 51, which are provided in the mold 5, while pressing the reinforcing fabric 4. The uncrosslinked rubber sheets 23 are crosslinked as the uncrosslinked rubber sheets 23 integrate with the tensile cord 3 and the reinforcing fabric 4 while flowing in the cavity as described above. As a result, as shown in FIG. 14, a cylindrical belt slab 14B is molded.

(4) The internal pressure of the vulcanization vessel is reduced to release the seal. The belt slab 14B molded between the mold 5 and the rubber sleeve 6 is demolded. The demolded belt slab 14B is cut into rings. Through these steps, the toothed belt 1 is also obtained.

### EXAMPLES

Hereinafter, the embodiment of the present invention will be more specifically described by means of examples, but the embodiment of the present invention is not limited to the examples below.

Here, a plurality of toothed belts were produced, and the performance thereof was evaluated.

### Belt Raw Materials

### (1) Uncrosslinked Rubber Composition

Uncrosslinked rubber compositions A1 to A4, B1, and B2 with blending formulas shown in Table 1 were prepared. Each uncrosslinked rubber composition was prepared by masticating the rubber component, further adding the rubber compounding ingredients, and kneading the mixture.

**[Table 1]**

| Material type | | Material name | A1 | A2 | A3 | A4 | B1 | B2 |
|---|---|---|---|---|---|---|---|---|
| Rubber component | | HNBR (1) | 60 | 30 | 45 | 60 | - | - |
| | | HNBR (2) | 40 | 70 | 55 | 40 | - | - |
| | | CR (1) | - | - | - | - | 100 | 100 |
| | Processing aid | Stearic acid | 0.5 | 0.5 | 0.5 | 0.5 | 0.5 | 0.5 |
| | Vulcanization accelerator aid | Zinc oxide | 5 | 5 | 5 | 5 | - | 5 |
| | | Magnesium oxide | - | - | - | - | 4 | 6.5 |
| | Reinforcing material | Carbon black (FEF) | 20 | 20 | 20 | 20 | - | - |
| | | Carbon black (HAF) | - | - | - | - | 50 | 50 |
| | | Silica | 20 | 20 | - | 20 | - | - |
| Rubber compoundin g ingredient | Plasticizer | Ether ester-based plasticizer | 5 | 5 | 5 | 5 | - | - |
| | Co-crosslinking agent | m-phenylenedimaleimide | 3 | 3 | - | 3 | 8 | 15 |
| | | Triallyl isocyanurate | 2 | 2 | 2 | 2 | - | - |
| | | Zinc methacrylate | - | - | - | - | 10 | - |
| | Short fibers | Aramid short fiber | 3 | 3 | - | 1 | 2 | - |
| | Crosslinking agent | Sulfur | 0.3 | 0.3 | 0.3 | 0.3 | - | - |
| | | Organic peroxide | 8 | 8 | 8 | 8 | 7 | - |

In Table 1, HNBR (1) is ZP2010 (manufactured by ZEON Corporation), HNBR (2) is ZSC2195CX (manufactured by ZEON CORPORATION), and CR (1) is SKYPRENE 505 (manufactured by Tosoh Corporation). In addition, in Table 1, aramid short fibers are para-aramid short fibers having a fiber length of 1 mm and a fiber diameter of 12 µm, and the organic peroxide is PEROXYMON F40 (manufactured by NOF CORPORATION).

### (2) Tensile Cord

A carbon tensile cord was used. The outer diameter ØT in the belt thickness direction and the outer diameter ØW in the belt width direction of the carbon tensile cord are both 1.10 mm.

### (3) Reinforcing Fabric

A woven fabric in which warp and weft yarns were made of polyamide fibers was subjected to the following adhesive treatment.

As the adhesive treatment, the above woven fabric was subjected to a soaking treatment in which drying was performed after immersion in low-viscosity rubber glue, and a coating treatment in which high-viscosity rubber glue was applied to the surface on the belt body side of the woven fabric and dried.

### Dimensions of Toothed Belt

A type of toothed belt called S8M was produced.

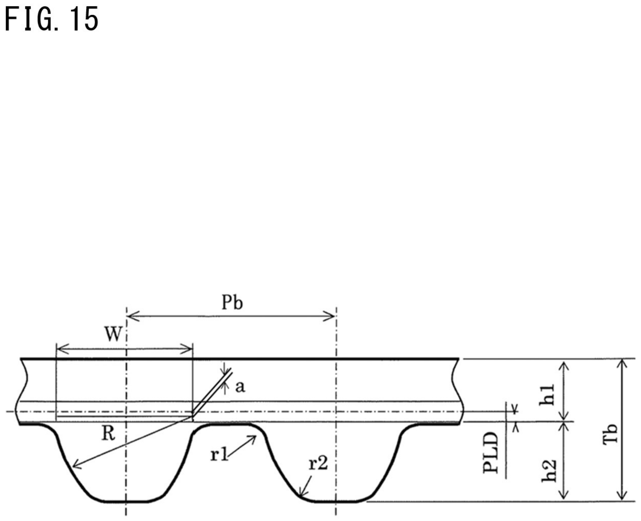

As for the dimensions of this toothed belt, dimensions indicated by reference signs in FIG. 15 are as follows.

Pb = 8.00 mm, Tb = 5.00 mm, h1 = 2.05 mm, h2 = 2.95 mm, R = 5.20 mm, W = 5.20 mm, a = 0.00 mm, r1 = 0.80 mm, r2 = 0.80 mm, PLD = 0.686 mm.

This toothed belt has a belt length of 840 mm and a belt width of 8 mm.

### Examples 1 to 4, Comparative Example 1

The combinations of belt raw materials shown in Table 2 were adopted, and toothed belts were produced by the two-stage production method described above.

### Comparative Example 2

The combination of belt raw materials shown in Table 2 was adopted, and a toothed belt was produced by the one-stage production method described above.

**[Table 2]**

| | | Example 1 | Example 2 | Example 3 | Example 4 | Comparative Example 1 | Comparative Example 2 |
|---|---|---|---|---|---|---|---|
| Uncrosslinked rubber composition | Tooth portion (existence of short fiber) | A1 (Yes) | A2 (Yes) | B1 (Yes) | A4 (Yes) | B2 (No) | A3 (No) |
| | Base portion | A3 | A3 | B2 | A3 | B2 | |
| Tensile cord | | Carbon tensile cord | Carbon tensile cord | Carbon tensile cord | Carbon tensile cord | Carbon tensile cord | Carbon tensile cord |
| Reinforcing fabric | Fiber | Polyamide fiber | Polyamide fiber | Polyamide fiber | Polyamide fiber | Polyamide fiber | Polyamide fiber |
| | Soaking | Yes | Yes | Yes | Yes | Yes | Yes |
| | Coating | Yes | Yes | Yes | Yes | Yes | Yes |
| Toothed belt production method | | Two-stage production method | Two-stage production method | Two-stage production method | Two-stage production method | Two-stage production method | One-stage production method |

### Evaluation

The toothed belts produced in the Examples and the Comparative Examples were evaluated as follows. The results are shown in Table 3.

### (1) Hardnesses of Belt Teeth

A Duro-A hardness was measured, as the hardness of the crosslinked rubber composition constituting each belt tooth, by the following method.

The Duro-A hardness was measured using a commercially available type-A durometer. Here, a rubber hardness meter was pressed against a side surface of a tooth portion of the belt body (an end surface of the tooth portion in the belt width direction) perpendicularly to this side surface to perform the measurement.

### (2) Tensile Elastic Moduli of Belt Teeth

The tensile elastic modulus in the X direction, the tensile elastic modulus in the Y direction, and the tensile elastic modulus in the Z direction were measured for the crosslinked rubber composition constituting each belt tooth.

The method for measuring the tensile elastic modulus in each direction is as already described.

### (3) Tooth Shear Strength

Measurements were made in accordance with the tooth shear strength test described in 6.5 of "Synchronous belt drives -- Test methods of physical properties" of JIS B 1865 (2021). This evaluation was performed using an S-shaped shear tooth tip.

The results are indicated as relative values with respect to the measured value of Example 4 with this measured value regarded as 100.

### (4) Running Test (Durability Evaluation)

A power transmission belt system 90 was configured by winding a toothed belt around pullies on two shafts including a drive pulley (number of teeth: 22, pitch diameter: 56.02 mm) 91 and a driven pulley (number of teeth: 33, pitch diameter: 84.03 mm) 92.

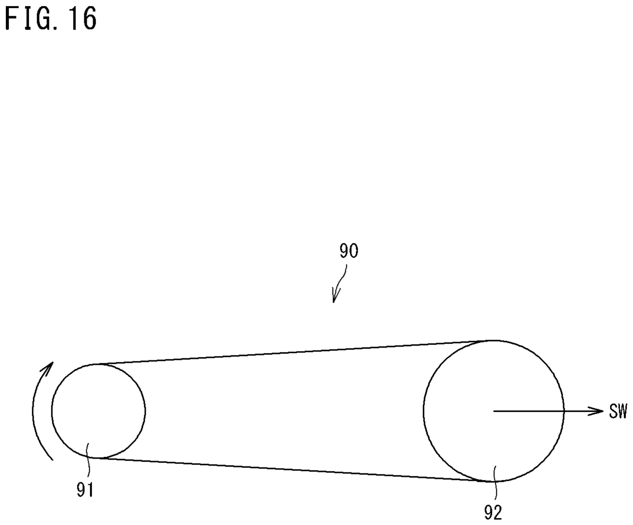

FIG. 16 shows a pulley layout of the power transmission belt system 90.

Using this power transmission belt system, a running test was performed at a drive-side rotation speed of 4212 rpm, a driven-side rotation speed of 2808 rpm, a driven-side load of 34.3 N·m, a span tension of 304 N, a set weight (SW) of 608 N, and an atmosphere temperature of 60 °C, and the time until tooth chipping occurred in the belt teeth was measured.

The results are indicated as relative values with respect to the measured value of Example 4 with this measured value regarded as 100.

**[Table 3]**

| | | | Example 1 | Example 2 | Example 3 | Example 4 | Comparative Example 1 | Comparative Example 2 |
|---|---|---|---|---|---|---|---|---|
| Rubber hardness of tooth portion | | Duro-A | 90 | 95 | 95 | 88 | 93 | 82 |
| Tensile elastic modulus of tooth portion | Actual value (MPa) | X | 3.6 | 6.8 | 4.4 | 3.5 | 3.4 | 1.6 |
| | | Y | 3.9 | 8.7 | 5.3 | 3.7 | 3.2 | 1.4 |
| | | Z | 4.2 | 9.9 | 4.9 | 3.8 | 3.0 | 1.6 |
| | Ratio | Y/X | 1.10 | 1.28 | 1.19 | 1.06 | 0.94 | 0.88 |
| | | Z/X | 1.16 | 1.46 | 1.11 | 1.09 | 0.89 | 1.01 |
| Tooth shear strength (index) | | | 106 | 126 | 110 | 100 | 79 | 64 |
| Durability (index) | | | 114 | 290 | 135 | 100 | 59 | 6 |

As shown in Table 3, it has become clear that the belt teeth according to the embodiment of the present invention are less likely to cause tooth chipping and have excellent durability.

The embodiment disclosed herein is merely illustrative in all aspects and should be recognized as not being restrictive. The scope of the present invention is defined by the scope of the claims and is intended to include meaning equivalent to the scope of the claims and all modifications within the scope.

### LIST OF REFERENCE SIGNS

1 toothed belt
11 back portion
12, 112 belt tooth
13A, 13B, 13C uncrosslinked molded body
14A, 14B belt slab
2 belt body
21 base portion
22, 122 tooth portion
23, 23A, 23B uncrosslinked rubber sheet
3, 103 tensile cord
4, 104 reinforcing fabric
5 mold
51 recess
52 protrusion
6 rubber sleeve
90 power transmission belt system
91 drive pulley
92 driven pulley
161, 171 sliced piece
162, 172, 173 test specimen

## Claims

1. A toothed belt in which a tensile elastic modulus of a rubber composition constituting belt teeth satisfies the following relationships (A) and (B):
(A) tensile elastic modulus X in belt width direction < tensile elastic modulus Y in belt length direction; and
(B) tensile elastic modulus X in belt width direction < tensile elastic modulus Z in belt thickness direction.

2. The toothed belt according to claim 1,
wherein the rubber composition contains short fibers.

3. The toothed belt according to claim 1 or 2,
wherein ratios of the tensile elastic modulus Y and the tensile elastic modulus Z to the tensile elastic modulus X are both 1.1 or more.

4. The toothed belt according to any one of claims 1 to 3,
wherein the tensile elastic modulus X is 3.5 MPa or more.

5. The toothed belt according to any one of claims 1 to 4,
wherein a pitch of the belt teeth is 8 mm or more and 14 mm or less.

6. The toothed belt according to any one of claims 1 to 5,
further satisfying the following relationship (C):
(C) tensile elastic modulus Y in belt length direction < tensile elastic modulus Z in belt thickness direction.

7. The toothed belt according to any one of claims 2 to 6,
wherein the rubber composition constituting the belt teeth is a rubber composition obtained by crosslinking an uncrosslinked rubber composition containing a rubber component and short fibers, and a content of the short fibers is 1 part by mass or more and 7 parts by mass or less per 100 parts by mass of the rubber component.

8. The toothed belt according to claim 7,
wherein the rubber component is one of hydrogenated nitrile rubber, chloroprene rubber, and ethylene-propylene-diene rubber.

9. The toothed belt according to any one of claims 1 to 8,
wherein a Duro-A hardness of the rubber composition constituting the belt teeth is 85 or more and 98 or less.

10. The toothed belt according to any one of claims 1 to 9,
comprising a reinforcing fabric forming a belt inner circumferential surface.
